# EUROPEAN PATENT SPECIFICATION

(11) **EP 0 586 527 B1**
(45) Date of publication and mention of the grant of the patent: **21.02.1996**
(21) Application number: 92912282.8
(22) Date of filing: 03.06.1992
(51) Int. Cl.: F16B 7/04, E04B 1/58

(54) **DEVICE FOR ATTACHING AN EXPANDABLE MEMBER TO A PROFILED SECTION**
VORRICHTUNG ZUM BEFESTIGEN EINES DEHNBARES TEILES AN EINE PROFILSTRECKE
DISPOSITIF POUR LA FIXATION D'UN ELEMENT EXPANSIBLE SUR UNE SECTION PROFILEE

(30) Priority: 05.06.1991 SE 9101703
(43) Date of publication of application: 16.03.1994
(73) Proprietor: MAXIBIT AB, S-112 49 Stockholm (SE)
(72) Inventor: AHLBERG, Erik, S-112 49 Stockholm (SE); CLAESSON, Alf, S-155 00 Nykvarn (SE)
(74) Representative: Lindblom, Erik J.
(86) International application number: SE9200378
(87) International publication number: WO9221887

(56) References cited:
- EP-A- 0 000 525
- EP-A- 0 075 417
- EP-A- 0 336 915
- DE-A- 1 500 683
- DE-C- 3 641 290
- SE-A-89 035 570
- US-A- 4 098 555

## Description

### TECHNICAL FIELD

The present invention relates generally to a device for attaching an expandable member to a profiled section or the like as stated in the preamble of claim 1.

A device of the aforesaid kind is particularly suited for use in display systems, where the device is able to serve as section attachment means and can be placed at any desired position along the section, and is also able to serve as a connecting device between a shelf or the like and a vertically extending profiled section or panel, and is able to allow a first profiled section in a first display system to coact in the aforesaid manner with a second profiled section forming a part of said display system, or a first profiled section of a display system, can be brought into firm, but readily detachable coaction with a second profiled section forming part of another or a second display system.

This latter application may require some modification and dimension changes to the components of said device.

### BACKGROUND ART

Devices by means of which an expandable member can be attached firmly, but removably to a profiled section, panel or like structure or to connect a first profiled section to a second profiled section so as these sections are positioned adjacent one another, is previously known in several different forms.

It can be mentioned here that it is known to use a member which can be expanded by rotation and to position these members adjacent the end parts of the profiled section, so as to form a frame structure thereby.

The present invention is not intended primarily this type of application. However, other devices of this kind adapted to cooperate with the profiled sections at any selected position therealong are known to the art.

Devices of this kind known hitherto are based on the principle of using an expandable member which comprises two parts, which are brought to an expanded or a compressed state by means of a screw thread, such that when in an expanded state, said member will firmly connect a first profiled section to a second profiled section, and when in a compressed state will enable the firm connection to be readily loosened.

Also belonging to the prior state of the art is the construction illustrated in the Swedish Patent Application 89 03557-0. However, although this publication teaches a device for firmly, but releasably securing a hairpin-shaped expandable member to a profiled section or rail, the device is not adapted to enable two elongated elements or profiled sections to be joined at right angles to one another. For this purpose, it is necessary to provide a grooved engagement means where the groove is positioned perpendicular to the longitudinal axis of the elongated expandable member.

The eccentric is accommodated fully within the expandable member and a screwdriver or like tool is used as a lever arm.

The device illustrated in publication DE-A1-1 500 683 teaches the use of two profiled sections which are joined in a central region by eccentric-like intermediate means that can be rotated to a widened state in the outer region of the profiled section parts and a non-activated state in the outer region of said section parts.

These members are rotated, or twisted, with the aid of a separate angled lever and are fully accommodated in the expandable member.

Publication DE-C1-3 641 290 teaches a method of connecting together two mutually adjacent panels provided with grooved edge parts. This publication, however, teaches attachment devices which are of a completely different kind to the aforesaid known devices or to the inventive devices.

The device taught by this publication includes a clamping device having two nuts, each of which coacts with a rod having a right-hand thread and a left-hand thread respectively and the central part of which is provided with a part or nut-part adapted for rotation of the rod, so that when the rod is rotated, or twisted, the nuts are brought more tightly together and therewith anchor the edge surfaces or loosen the same.

### DISCLOSURE OF THE PRESENT INVENTION

### TECHNICAL PROBLEMS

When studying the state of the prior art as described above, it will be seen that a technical problem resides in the realization of the significance of constructing a member which can be expanded in response to rotational movement and which can be readily placed at any selected position along the extension of a first profiled section or a panel, where the holding force is sufficiently strong to enable force to be exerted on the member in the longitudinal extension of the profiled section without causing the member to slide with elements normally required in display systems.

It will also be seen that a further technical problem is one of realizing the need of particularly dimensioning the dimensions of an at least 90°-rotatable lever arm, an eccentric section rotatable by the lever arm, and the expandable member used in relation to one another.

Another technical problem is one of providing conditions which will enable one and the same expandable member to be used when securing to the profiled section or the panel a separate element capable of supporting a load, and also when securing two profiled sections or the like one to the other.

A further technical problem is one of realizing that an expandable member constructed in accordance with the fundamental principles of the present invention can be readily placed at any selected position along the axial length of a first profiled section and a second profiled section and therewith create conditions for obtaining a fixed connection of said sections, even though the sections should belong to display systems of different kinds in which the profiled sections and the grooves or channels have mutually different cross-sectional shapes.

It will also be seen that a technical problem resides in the provision of a member which will expand when rotated and which permits the presence of a very small gap between the first profiled section and the second profiled section, and primarily to provide a constant distance between the first profiled section and the second profiled section, even when these sections belong to mutually different display systems.

In addition, it will be seen that a technical problem is one of realizing the significance of allowing the expandable member to comprise at least one spring element, and also to realize that when a spring element is used, said element shall be located on one side of a lever arm that functions to effect rotary movement.

Another technical problem is one of realizing the significance of dimensioning the spring element or elements so as to enable the same to be inserted into their respective channels, in a non-expanded state, and also to enable the spring element to open in response to rotational movement of the lever arm to an extent such that the openable leg parts of the spring element will be brought into clamping contact with the mutually opposing or opposite wall-parts of the inner larger channel or groove part.

It will also be seen that a technical problem resides in the construction of an expandable member which will include on each side of the lever arm abutment surfaces which will enable the expandable members to be brought into satisfactory coaction with said inner channel part, irrespective of the display system concerned, while spacing the first profiled section and the second profiled section apart at a distance corresponding to the thickness of the lever arm.

It will also be seen that a technical problem is one of realizing the significance of configuring or forming eccentric sections which will cause legged spring elements, preferably hairpin-shaped elements, to move from a non-expanded position to an expanded position, or vice versa, in response to said rotational movement.

Another technical problem is one of realizing the ranges or limits within which the eccentric section of the lever arm shall work in order to obtain a satisfactory function and adaptation to the form of spring element used.

Another technical problem is one of realizing the significance of configuring the legs so that certain parts thereof are able to spring so as to afford an adaptation of the clamping force against the parallel wall-parts of the channel, even in the case of relatively large tolerances.

It will also be seen that a technical problem resides in realizing the significance of orientating the lever arm advantageously in relation to one or two longitudinally extending symmetry lines of the requisite eccentric section.

Finally, it will be seen that a technical problem also resides in realizing the necessary dimensioning of the spring elements so as to enable said elements to be held by the channel against corotation with the lever arm.

### SOLUTION

With the intention of solving one or more of the aforesaid technical problems, the present invention is based on an earlier known device constructed to enable an expandable member to be firmly but readily removably attached to a profiled section or panel, or to join a first profiled section to a second profiled section, in a manner so that they will be orientated adjacent one another as stated in the preamble of claim 1.

On the basis of this earlier known device, it is now proposed in accordance with the invention the features stated in the characterizing part of claim 1.

Further embodiments proposed in accordance with the invention and falling within the scope of the inventive concept, are proposed in the subclaims.

### ADVANTAGES

Those advantages which are primarily associated with the inventive device reside in the ability of firmly, but removably, securing an expandable member and of connecting a first profiled section to a second profiled section adjacent one another even when the profiled sections belong to different display systems, and also to provide conditions in which a small and constant space can be obtained between the profiled sections, this space being corresponded simply by the thickness of the lever arm.

The inventive rotatably expandable member has been found to provide an extremely good and readily adaptable clamping force and can be readily inserted into the groove of the profiled section and readily removed from said groove, with the clamping action of said member being actuable by rotating the lever arm through 90°.

### BRIEF DESCRIPTION OF THE DRAWINGS

A number of embodiments of devices, which exhibit characteristic significance of the present invention, will now be described in more detail with reference to the accompanying drawings, in which;
- Figure 1: is a perspective view of two separate display systems whose separate profiled edge sections can be joined together in accordance with the principles of the invention;
- Figure 2: is a sectional view of different groove cross-sections applicable to a first profiled section and a second profiled section forming part of the display systems shown in Figure 1;
- Figure 3: is a side view of a lever-arm part included in a rotation expandable member according to the invention, the function of which depends on the use of one or two spring elements, not shown, said number being dependent on the application concerned;
- Figure 4: is a top view of a first embodiment of a spring element, and shows the element in a non-expanded state;
- Figure 5: illustrates the spring element of Figure 4 in a fully expanded state, said element being brought to the shown state by rotation of an eccentric section through 90°;
- Figure 6: illustrates the clamping action afforded by the spring properties of the spring element against one wall-part of the inner channel part;
- Figure 7: is a horizontal view of the lever-arm part shown in Figure 3;
- Figure 8: is a top view of a second embodiment of a spring element;
- Figure 9: is a top view of a third embodiment of a spring element and shows the element in a non-expanded state;
- Figure 10: is a plan view of the spring element shown in Figure 9 in a fully expanded state; and
- Figure 11: illustrates an application which uses only one single spring element that coacts with an expandable member.

### DESCRIPTION OF EMBODIMENTS AT PRESENT PREFERRED

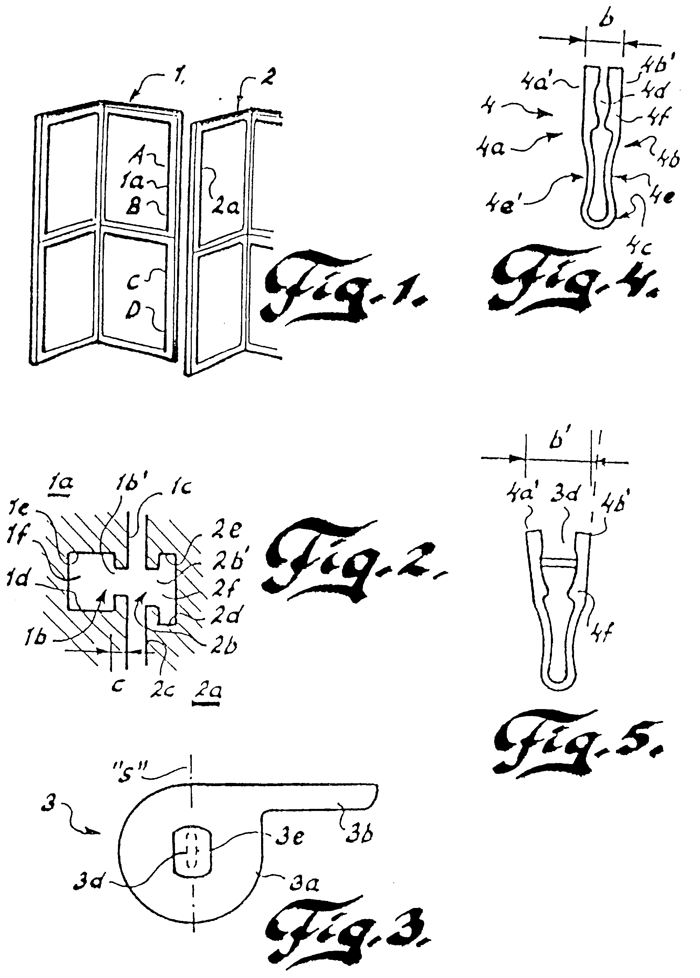

Shown in perspective in Figure 1 is a first system 1 which comprises four frame parts, each of which surrounds a panel or plate and which are connected together in a known manner, normally hinged together.

Figure 1 also illustrates a second display system, which also comprises a number of frame parts similar to the display system 1, but with the difference that the profiled sections used to construct the frames or the panels 1a and 2a have slightly different forms, as illustrated in Figure 2.

Among other things, the present invention intends to provide the possibility of connecting a first profiled section 1a to a second profiled section 2a in a firm but detachable fashion, such that the profiled sections are orientated in the same plane and extend parallel with one another.

As will be seen from Figure 2, the first profiled section 1a has an edge-related, 1c, longitudinally extending groove or channel 1b which faces towards an edge part 2c of the second profiled section 2a, while the second profiled section 2a has an edge-related, 2c, longitudinally extending groove or channel 2b which faces towards the edge-part 1c of the first profiled section 1a.

Each of the channels 1b, 2b, has a constricted or narrowed edge-related (1c, 2c) part 1b', 2b' provided with an entrance-functioning opening, and an inner, larger space or part 1f, 2f, defined by wall-parts 1d, 1e and 2d, 2e respectively.

As will be seen from Figure 2, the opening 1b' is smaller than the opening 2b' and the wall-parts 1d and 1c are located closer together than the wall-parts 2d and 2e.

As will be evident from the following description, the spring elements and eccentric sections or parts need to be specially dimensioned for each particular application that has large dimensional differences, so that an equivalent or generally equivalent clamping action will be obtained in both channels.

With the use of a plurality of rotationally expandable members positioned at the sections A, B, C and D in Figure 1, with, among other things, clamping surfaces which face towards the inner channel surfaces 1d, 1e or wall-parts of the inner channel part 1f, the profiled sections 1a, 2a, are clamped firmly together as a result of the clamping surface being brought into firm clamping engagement with the wall-parts 1d, 1e of the inner part 1 in response to said rotational movement.

As will also be seen from Figure 2, the inner part 1f of the channel defined by the wall-parts of the first profiled section la has a greater depth than the corresponding inner channel part 2f defined by the wall-parts 2d, 2e of the second profiled section 2a.

Figure 3 is a top view of a lever arm included in the expandable member, said lever arm 3 having the form of a part-circular disc 3a and an actuating arm 3b extending therefrom. Provided in the centre of the disc is an abutment surface 3c, an eccentric section 3d and an outer stiffening 3e (see Figure 7).

In order to provide a complete expandable member, the lever arm 3 has one, normally two, spring elements, where one is shown in top view in Figure 4.

The spring element 4 may be located adjacent the illustrated flat side of the lever arm 3 in Figure 3, and a second such spring element 4', a hairpin-like element, may be located on the other side (see Figure 7).

The lever arm 3 is configured to execute rotary movement in relation to the spring elements when said elements are located in respective channels 1b and 2b.

As will be seen from Figure 4, the illustrated spring element has two legs (4a, 4b), which are joined together at a region 4c. Figure 4 also illustrates the configuration of the free and flexurally rigid leg parts 4a', 4b' of the spring element 4, and it will be seen that the two spring parts shall be opened slightly in order to be inserted so that the eccentric section 3d will be located within a recess 4d in the spring element.

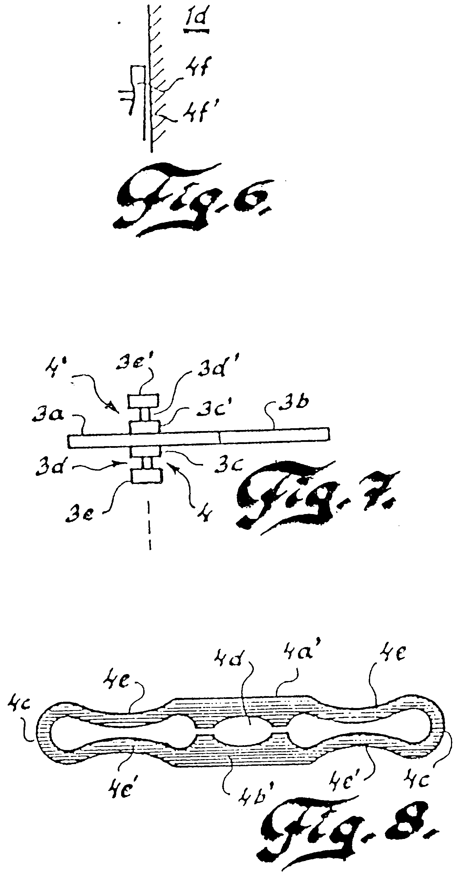

Figure 5 illustrates an operational state in which the eccentric section 3d of the lever arm 3 has been rotated through 90°, therewith causing the free leg parts 4a', 4b' of the spring element to open fully to the position shown in Figure 5.

The leg parts 4e, 4e' are bent inwards so as to allow, among other things, the region 4f and its clamping surface 4f' to take a near parallel position with a wall section 1d, under the action of the eccentric section 3d.

It will be evident from Figures 2 and 4 that when in a non-expanded state, the spring element 4 is dimensioned for insertion into a channel, through the opening-provided part thereof, which means that the width "b" of the spring element shall be slightly smaller than the opening 1b'.

When the spring element is inserted, it can be opened in response to rotation of the lever arm to an extent such that the free, flexurally rigid leg parts 4a', 4b' will be brought into clamping action with the opposing and parallel wall-parts 1d, 1e of the inner channel part, as shown in Figure 5, which means that the distance between these wall-parts shall be slightly smaller than the distance "b'" between the free leg parts 4a', 4b' of the spring elements, as shown in Figure 5.

As shown in Figure 7, located on each side of the lever arm 3 are abutments 3c, 3c' having an extension on the side of the lever arm 3 which at least corresponds to the thickness of the part provided with the opening 1b', i.e. the distance "c" in Figure 2.

Located on each side of the abutments 3c, 3c' is a respective eccentric section 3d, 3d', which, among other things, is intended, at the same time, to cause the spring elements (4, 4') inserted in the channels 1b and 2b to move from a non-expanded state.

The eccentric section 3d of the lever arm is intended to act within that half of the leg parts which are remote from the region 4c at which the legs are joined and where the leg parts 4a' and 4b' are flexurally rigid.

The legs of a hairpin-like spring element are dimensioned so that within the half of the leg parts which constitute the region 4c at which the legs are joined, will spring to enable the free, flexurally rigid leg parts 4a', 4b' of the spring elements remote from said leg joining region 4c, to rotate or approach the parallel direction of the opposing wall-parts and take a more parallel position (shown in Figure 6) than the position shown in Figure 5.

Although the lever arm has been shown in the form of a disc with an actuating arm part formed integral therewith, it will be understood that the lever arm may, alternatively, also have the form of a single arm or a single rod.

The actuating arm 3b is positioned so as to be perpendicular, or at least almost perpendicular, to a longitudinal symmetry line "S", of said eccentric section 3d.

The two hairpin-like spring elements 4, 4' are held against corotation with movement of the lever arm 3b, by respective channels 1b and 2b.

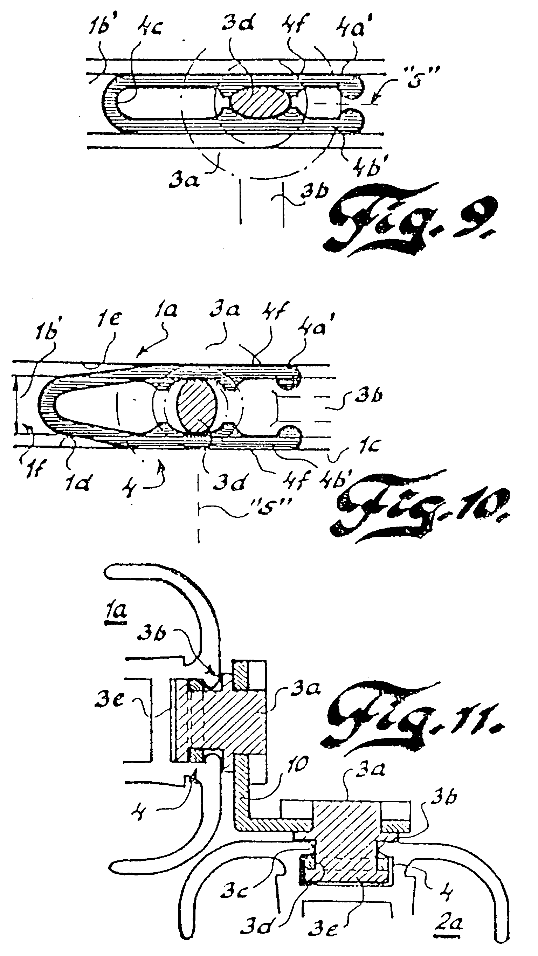

Figure 8 is a top view of a second embodiment of a spring element. This element has a symmetrical oval shape, with a centre positioned recess 4d for accommodating the eccentric section.

Figure 9 is a top view of a third embodiment of a spring element, and shows the spring element in a non-expanded state. This spring element has a section 4a', 4b' which tends to bend slightly, these sections 4a', 4b' providing the clamping surfaces 4f' which engage with the parallel wall sections 1e and 1d, as shown in Figure 10.

The clamping surfaces may be serrated or likewise roughened.

Figure 11 illustrates an embodiment which includes two similar expandable members and only one spring element 4, said spring element being shown in an expanded and firmly holding state.

An angular part 10 coacts with the part 3a, and the part 3a is pivotally connected to the part 10 thus causing the profiled sections 1a and 2a to form a right angle with one another.

As will be understood, the part 10 can be exchanged for an equivalent device, such as an eye, hook or the like for coaction with a member.

When two profiled sections are to be joined together so as to define an angle therebetween, such as the connection of horizontal or sloping shelving to vertically extending profiled sections or posts, the longitudinally extending symmetry line of an eccentric section 3d shall form an angle with the longitudinally extending symmetry line of the adjacent eccentric section 3d', so that rotation through 90° will result in secure clamping of the two members.

The present invention also enables one spring element to be readily replaced with another, so as to enable the device to be adapted readily to the dimensions of different systems.

The configuration of the eccentric can also be changed.

It will be understood that the invention is not restricted to the aforedescribed and illustrated exemplifying embodiments thereof, and that modifications can be made within the scope of the inventive concept as defined in the following Claims.

## Claims

1. An assembly device comprising one or two profiled sections and an expandable member by means of which an expandable member (3, 4) can be firmly but easily removably connected to a profiled section (1a) or which will enable a first profiled section (1a) to be connected to a second profiled section (2a) with the aid of said member in a manner such as to orientate said profiled sections in relation to one another, wherein said first profiled section (1a) has a longitudinally extending channel (1b) having a constricted or narrowed edge-related (1c) opening-provided channel part (1b') and an inner channel part (1f) defined by wall-parts of said section, wherein a rotationally expandable member having clamping surfaces which face towards the inner surfaces or wall parts of said inner channel part (1f) is intended to be brought into firm clamping engagement with the wall parts of said inner part in response to said rotational movement, and wherein the expandable member (3, 4) comprises at least one spring element provided with legs (4a', 4b'),
**characterized** in that said spring element (4) is located on one side of an eccentric section (3d) which functions to generate rotational movement and which is included in a lever arm (3) belonging to the expandable member; in that the spring element (4), in a non-expanded state, is dimensioned for insertion into the inner channel part (1f) through its opening-provided longitudinally extending channel (1b) and when so inserted rotation of the lever arm (3) and its eccentric section (3d) will cause the spring element to open and expand to an extent such that the expandable parts (4a', 4b') of the spring element will be brought into requisite clamping contact with the mutually opposing wall parts (1e, 1d) of the inner channel part (1f).

2. A device according to Claim 1, **characterized** in that the spring element (4) is positioned adjacent one side of the lever arm (3), and in that a load-adapted section is positioned adjacent the other side of the lever arm.

3. A device according to Claim 1, **characterized** in that two legged spring elements (4, 4') are each located on a respective side of the lever arm (3).

4. A device according to Claim 3, **characterized** in that each spring element has a hairpin-like configuration.

5. A device according to Claim 3, **characterized** in that located on each side of the lever arm is a respective abutment (3c, 3c') whose extension on one side of the lever arm corresponds to and at least exceeds the thickness of the part provided with said opening or said channel.

6. A device according to Claim 5, **characterized** in that located on each side of the abutments (3c, 3c') is an eccentric section (3d, 3d') which is intended to act on a spring element inserted in respective channels and to cause said spring element to move from a non-expanded state to an expanded state, or vice versa.

7. A device according to Claim 5 or 6, **characterized** in that the eccentric section of said lever arm is intended to act within those parts of the leg portions (4a', 4b') that are remote from the region (4c) at which the legs are joined.

8. A device according to Claim 4, **characterized** in that when the spring element has a hairpin-like configuration, the legs of said element are dimensioned to spring within that part of the leg portions forming the region (4c) at which the legs (4a', 4b') are joined, so as to enable the expandable leg portions of the spring elements which are remote from the region at which the legs are joined to conform to the direction of said opposing wall-parts.

9. A device according to Claim 1, **characterized** in that the lever arm has the form of a disc (3a) with an integrally formed arm (3b), or has the form of a single arm, such as a rod.

10. A device according to Claim 1, 6 or 9, **characterized** in that the arm (3b) extends perpendicularly, or at least generally perpendicularly, to a longitudinal symmetry line of at least one of said eccentric sections.

11. A device according to Claim 3, **characterized** in that the two hairpin-like spring elements are held against corotation with rotational movement of the lever arm by respective channels.

12. A device according to Claim 10, **characterized** in that one longitudinally extending symmetry line of an eccentric section forms an angle, e.g. an angle of 90°, with a longitudinally extending symmetry line of an adjacent eccentric section.

## Patentansprüche

1. Montagevorrichtung mit einem oder zwei Profilstücken und einem dehnbaren Teil, mit der ein dehnbares Teil (3, 4) fest, aber leicht lösbar mit einem Profilstück (1a) verbunden werden kann oder die die derartige Verbindung eines ersten Profilstücks (1a) mit einem zweiten Profilstück (2a) mit Hilfe des Teils gestattet, daß die Profilstücke zueinander ausgerichtet werden, wobei das erste Profilstück (1a) einen in Längsrichtung verlaufenden Kanal (1b) mit einem verengten oder eingeschnürten, der Kante zugeordneten (1c) und mit einer Öffnung versehenen Kanalteil (1b') und einem von Wandteilen des Stücks definierten inneren Kanalteil (1f) aufweist und wobei ein sich als Folge einer Drehbewegung dehnbares Teil mit Klemmflächen, die zu den Innenflächen oder Wandteilen des inneren Kanalteils (1f) hin weisen, als Reaktion auf die Drehbewegung in festen Klemmeingriff mit den Wandteilen des inneren Teils gebracht werden soll und wobei das dehnbare Teil (3, 4) mindestens ein mit Schenkeln (4a', 4b') versehenes Federelement aufweist, dadurch gekennzeichnet, daß sich das Federelement (4) auf einer Seite eines exzentrischen Stücks (3d) befindet, das Drehbewegung erzeugt und in einem zum dehnbaren Teil gehörenden Hebelarm (3) enthalten ist; daß das Federelement (4) in nichtgedehntem Zustand zum Einsetzen in den inneren Kanalteil (1f) durch seinen eine Öffnung aufweisenden, in Längsrichtung verlaufenden Kanal (1b) dimensioniert ist und, wenn so eingesetzt, Drehung des Hebelarms (3) und seines exzentrischen Stücks (3d) das Federelement dazu veranlaßt, sich soweit zu öffnen und zu dehnen, daß die dehnbaren Teile (4a', 4b') des Federelements in erforderlichen Klemmkontakt mit den sich einander gegenüberstehenden Wandteilen (1e, 1d) des inneren Kanalteils (1f) gebracht werden.

2. Vorrichtung nach Anspruch 1, dadurch gekennzeichnet, daß das Federelement (4) neben einer Seite des Hebelarms (3) angeordnet ist und daß ein lastangepaßtes Stück neben der anderen Seite des Hebelarms angeordnet ist.

3. Vorrichtung nach Anspruch 1, dadurch gekennzeichnet, daß sich zweischenklige Federelemente (4, 4') jeweils auf einer jeweiligen Seite des Hebelarms (3) befinden.

4. Vorrichtung nach Anspruch 3, dadurch gekennzeichnet, daß jedes Federelement eine haarnadelähnliche Konfiguration aufweist.

5. Vorrichtung nach Anspruch 3, dadurch gekennzeichnet, daß sich auf jeder Seite des Hebelarms jeweils eine Stoßfläche (3c, 3c') befindet, deren Erstreckung auf einer Seite des Hebelarms der Dicke des mit der Öffnung oder dem Kanal versehenen Teils entspricht oder etwas darüber liegt.

6. Vorrichtung nach Anspruch 5, dadurch gekennzeichnet, daß sich auf jeder Seite der Stoßflächen (3c, 3c') ein exzentrisches Stück (3d, 3d') befindet, das auf ein in jeweiligen Kanälen eingesetztes Federelement wirken und das Federelement dazu veranlaßen soll, sich von einem nichtgedehnten Zustand in einen gedehnten Zustand oder umgekehrt zu bewegen.

7. Vorrichtung nach Anspruch 5 oder 6, dadurch gekennzeichnet, daß das exzentrische Stück des Hebelarms innerhalb derjenigen Teile der Schenkelabschnitte (4a', 4b') wirken soll, die sich von dem Bereich (4c), in dem sich die Schenkel treffen, entfernt befinden.

8. Vorrichtung nach Anspruch 4, dadurch gekennzeichnet, daß die Schenkel des Federelements, wenn dieses eine haarnadelähnliche Konfiguration aufweist, so dimensioniert sind, daß sie innerhalb des Teils der Schenkelabschnitte federn, die den Bereich (4c) bilden, in dem sich die Schenkel (4a', 4b') treffen, damit die dehnbaren Schenkelabschnitte der Federelemente, die sich von dem Bereich, in dem sich die Schenkel treffen, entfernt befinden, der Richtung der einander gegenüberliegenden Wandteile entsprechen können.

9. Vorrichtung nach Anspruch 1, dadurch gekennzeichnet, daß der Hebelarm die Form einer Scheibe (3a) mit einem angeformten Arm (3b) oder die Form eines einzelnen Arms wie z.B. eines Stabs aufweist.

10. Vorrichtung nach Anspruch 1, 6 oder 9, dadurch gekennzeichnet, daß sich der Arm (3b) senkrecht oder zumindest allgemein senkrecht zu einer Symmetriegeraden von mindestens einem der exzentrischen Stücke erstreckt.

11. Vorrichtung nach Anspruch 3, dadurch gekennzeichnet, daß die beiden haarnadelähnlichen Federelemente durch jeweilige Kanäle gegen Mitdrehen mit der Drehbewegung des Hebelarms festgehalten werden.

12. Vorrichtung nach Anspruch 10, dadurch gekennzeichnet, daß eine in Längsrichtung verlaufende Symmetriegerade eines exzentrischen Stücks mit einer in Längsrichtung verlaufenden Symmetriegeraden eines benachbarten exzentrischen Stücks einen Winkel, z.B. einen Winkel von 90°, bildet.

## Revendications

1. Dispositif d'assemblage comprenant une ou deux sections profilées et un élément expansible, au moyen duquel un élément expansible (3, 4) peut être raccordé fermement mais de manière facilement détachable à une section profilée (1a), ou qui permettra à une section profilée (1a) d'être raccordée à une deuxième section profilée (2a) à l'aide dudit élément de manière à orienter lesdites sections profilées l'une par rapport à l'autre, dans lequel ladite première section profilée (1a) comporte une rainure (1b) s'étendant longitudinalement et ayant une partie de rainure pourvue d'une ouverture étranglée ou rétrécie (1b') en relation avec le bord (1c) et une partie de rainure interne (1f) définie par des parties de paroi de ladite section, dans lequel un élément expansible en rotation ayant des surfaces de serrage qui sont tournées vers les surfaces internes ou les parties de paroi de ladite partie de rainure interne (1f) est destiné à être amené en prise de serrage ferme avec les parties de paroi de ladite partie interne en réponse audit mouvement de rotation, et dans lequel l'élément expansible (3, 4) comprend au moins un organe ressort pourvu de pattes (4a', 4b'), caractérisé en ce que ledit organe ressort (4) est situé d'un côté d'une section excentrique (3d) qui fonctionne de manière à engendrer un mouvement de rotation et qui est incluse dans un bras de levier (3) appartenant à l'élément expansible; en ce que l'organe ressort (4), dans un état non expansé, est dimensionné de manière à pouvoir être inséré dans la partie de rainure interne (1f) à travers sa rainure (1b) s'étendant longitudinalement et pourvue d'une ouverture, et lorsqu'il est inséré de la sorte, la rotation du bras de levier (3) et de sa section excentrique (3d) aura pour effet de causer l'ouverture et l'expansion de l'organe ressort dans une mesure telle que les parties expansibles (4a', 4b') de l'organe ressort soient amenées en contact de serrage requis avec les parties de paroi opposées l'une à l'autre (1e, 1d) de la partie de rainure interne (1f).

2. Dispositif selon la revendication 1, caractérisé en ce que l'organe ressort (4) est positionné de manière adjacente à un côté du bras de levier (3), et en ce qu'une section adaptée aux charges est positionnée de manière adjacente à l'autre côté du bras de levier.

3. Dispositif selon la revendication 1, caractérisé en ce que deux organes ressorts à pattes (4, 4') sont chacun situés sur un côté respectif du bras de levier (3).

4. Dispositif selon la revendication 3, caractérisé en ce que chaque organe ressort a une configuration en épingle à cheveux.

5. Dispositif selon la revendication 3, caractérisé en ce que de chaque côté du bras de levier est situé un élément de butée respectif (3c, 3c') dont l'extension d'un côté du bras de levier correspond à et dépasse au moins l'épaisseur de la partie pourvue de ladite ouverture ou de ladite rainure.

6. Dispositif selon la revendication 5, caractérisé en ce que de chaque côté des éléments de butée (3c, 3c') est située une section excentrique (3d, 3d') qui est destinée à agir sur un organe ressort inséré dans des rainures respectives et à faire passer ledit organe ressort d'un état de non-expansion à un état d'expansion, ou vice versa.

7. Dispositif selon la revendication 5 ou 6, caractérisé en ce que la section excentrique dudit bras de levier est destinée à agir au niveau des parties des portions de pattes (4a', 4b') qui sont éloignées de la zone (4c) où les pattes se rejoignent.

8. Dispositif selon la revendication 4, caractérisé en ce que lorsque l'organe ressort a une configuration en épingle à cheveux, les pattes dudit organe sont dimensionnées de manière à avoir leur effet de ressort au niveau de la partie des portions de pattes formant la zone (4c) où les pattes (4a', 4b') se rejoignent, de manière à permettre aux portions de pattes expansibles des organes ressorts qui sont éloignées de la zone où les pattes se rejoignent, de se conformer à la direction desdites parties paroi opposées.

9. Dispositif selon la revendication 1, caractérisé en ce que le bras de levier a la forme d'un disque (3a) avec un bras (3b) formé intégralement, ou a la forme d'un bras unique, tel qu'une barre.

10. Dispositif selon la revendication 1, 6 ou 9, caractérisé en ce que le bras (3b) s'étend perpendiculairement, ou au moins de manière généralement perpendiculaire à un axe de symétrie longitudinal d'au moins une desdites sections excentriques.

11. Dispositif selon la revendication 3, caractérisé en ce que les deux organes ressorts en épingle à cheveux sont retenus par des rainures respectives de manière à ne pas entrer en corotation avec le mouvement de rotation du bras de levier.

12. Dispositif selon la revendication 10, caractérisé en ce qu'un axe de symétrie s'étendant longitudinalement d'une section excentrique forme un angle, par exemple un angle de 90°, avec un axe de symétrie s'étendant longitudinalement d'une section excentrique adjacente.
